# EUROPEAN PATENT APPLICATION

(11) **EP 1 156 313 A1**
(43) Date of publication of application: **21.11.2001**
(21) Application number: 01304345.0
(22) Date of filing: 16.05.2001
(51) Int. Cl.: G01K 5/48

(54) **Temperature sensor using shape memory alloy and manufacturing method thereof**

(30) Priority: 17.05.2000 KR 2000026518; 19.01.2001 KR 2001003151
(71) Applicant: Dae Han New Pharm Co., Ltd., Seoul 137-130 (KR)
(72) Inventor: Park, Ji-Hoon, Suwon-shi, Kyunggi-do 441-704 (KR)
(74) Representative: Ertl, Nicholas Justin

(57) **Abstract**

A temperature sensor comprises a strip unit comprising a plurality of U-shaped staples, each of which has two feet and is made of a shape memory alloy having a first shape at over its critical temperature and an auxiliary second shape at below the critical temperature.

The invention provides a temperature sensor using a shape memory alloy, which is easily attached to a product to be stored at a lower temperature and enables simple judgment of whether the product is damaged due to the exposure to over a critical temperature, for example during storage. The temperature sensor is fixed on a container of products or goods by stapler to have a second shape under critical temperature and a first shape when exposed, even temporarily, to temperatures above critical temperature of the shape memory alloy, thereby to indicate a damage of the product.

## Description

The present invention relates to a temperature sensor using a shape memory alloy (SMA), and particularly, to a temperature sensor using a shape memory alloy for sensing the exposure of a product stored at a relatively lower temperature to a critical temperature.

In general, it is known that a conventional metal material keeps the deformed shape after being plastic- deformed over the limitation of its elastic coefficient. On contrary, after plastic deformation, a shape memory alloy (called "SMA" below) has its own inherent property to return to its original shape if the deformed SMA is heat-processed at above its transformation temperature. There are alloys of a Ti-Ni type, Cu type, a Fe type, etc. which are known by studies of their properties of Martensitic deformation and the shape memory and their crystal structures at a lower or higher temperature. Therefore, the SMA is now used in various fields. Particularly, the SMA is heat-treated to be used as a specific element or to have a specific shape for a predetermined purpose of a shape memory related to a temperature.

In these respects, the SMA has been applied to a functional device provided in an actuator, etc. in a higher precision part and a temperature sensor, and also has been used as a fixing part that is simply fixed to a product in the form of a plate, a wire, etc. for indicating a temperature by being returned to its own inherent shape beyond a predetermined deformation temperature. In other words, the fixing part has been used in easily identifying whether frozen products including frozen meats, etc., and cold storage foodstuffs including milk are exposed to a critical temperature during being processed or transported.

A typical technology of a temperature sensor using a SMA is disclosed in U.S. Patent No. 5,735,607. The patent is related to shape memory alloy thaw sensors for providing permanent indication of the damage of food products such as frozen dairy products and frozen meats spoiled upon being exposed to thawing temperatures for even a short time and frozen medical products such as blood and certain pharmaceuticals unstable once exposed to thawing or other high temperatures, even if the temperature later returns to a safe value. This may occur due to improper handling or cooling equipment malfunction in transportation or during being processed. Accidental use of spoiled products is prevented.

The SMA sensor changes a shape at its Austenitic temperature, and will not return to its original shape in the Martensitic phase if the temperature returns to the original value. In other words, the SMA sensor has at least one member having a first shape at temperatures below a critical temperature and a second shape at temperatures above the critical temperature, where each member assumes the second shape when the temperature rises above the critical temperature but does not return to the first shape when the temperature falls below the critical temperature. The sensor has a plurality of indicators mounted with the members, where the indicators obscure the indication surface when the members are in the first shape, and where the indicators do not obscure the indication surface when the members are in their second shape.

US 5,735,607 further comprises a structure for preventing the shape memory alloy member from being returned to the first shape after being made into the second shape according to its changing property, which makes the total configuration of the thaw sensor complex. Also, the thaw sensor is not forced to use the change of the inherent shape of the shape memory alloy. Therefore, this thaw sensor has disadvantages in that it is expensive and available only for a specific product, not for a general cheaper product. Further, the use of the thaw sensor must be accompanied with a cumbersome process of properly attaching the base to the product in advance for mounting the thaw sensor thereon. In order to confirm the operation of the thaw sensor, the state of an indicator on the base must be carefully checked.

According to one embodiment of the invention, a temperature sensor comprises a strip unit comprising a plurality of U-shaped staples, each of which has two feet and is made of a shape memory alloy having a first shape at over its critical temperature and an auxiliary second shape at below the critical temperature.

The invention provides a temperature sensor using a shape memory alloy, which is easily attached to a product to be stored at a lower temperature and enables simple judgment of whether the product is damaged due to the exposure to over a critical temperature, for example during storage.

Therefore, the temperature sensor including a plurality of staples has the second shape at below the critical temperature, when fixed to the wrapping container of the product, and is changed into the first shape at over the critical temperature, when exposed for a long time, even temporarily, thereby indicating the damage of the product.

A method of manufacturing a temperature sensor comprises the steps of preparing a strip unit constituted in an aggregate as a plurality of U shaped staples, each of which has two feet and is made of a shape memory alloy having various first shapes at over its critical temperature and attaching each of the staple by means of a stapler to a wrapping container of a cool storage product so as to form an auxiliary second shape at the same as that of a compressing portion of a stapler press.

According to another embodiment of the invention, a temperature sensor comprises a strip unit constituted in an aggregate as a plurality of paired U shaped staples, each of which two feet and is made of a shape memory alloy having various first shapes, in which the paired staples are superposed in a dual structure to each other and have a first shape at over its critical temperature and an auxiliary second shape at below the critical temperature, respectively.

A method of manufacturing a temperature sensor comprises steps of preparing a strip unit constituted in an aggregate as a plurality of paired U-shaped staples, each of which has two feet, and superposed in a dual structure to each other and made of a shape memory alloy having a first shape at over its critical temperature and attaching each of the staples by means of a stapler to a wrapping container of a cool storage product so as to force both feet of one staple to be perforated into a predetermined position of a wrapping container of a product and both feet of the other staple to be widened on the opposite side of the container to both feet of the lower staple.

According to still another embodiment of the invention, a temperature sensor comprises a strip unit constituted in an aggregate as a plurality of staple members made of a shape memory alloy to have a first shape at over its critical temperature, in which the staple member includes a U-shpaed staple having two feet and an escaping member to be coupled with the lower bottom of the U-shaped staple, an indicating portion being provided for indicating the state of a cool storage product at below a critical temperature, in which the staple has a first shape at over the critical temperature and an auxiliary second shape at below the critical temperature.

A method of manufacturing a temperature sensor comprises steps of preparing a strip unit constituted in an aggregate as a plurality of paired staples which are made of a shape memory alloy having a first shape at over its critical temperature, in which the paired staple includes a U shaped staple having two two feet and an escaping member coupled to the U-shaped staple made of the shape memory alloy having a shape different therefrom or changed into a different shape and escaped therefrom, one of which is provided with an indicating portion for indicating the state of a cool storage product at below a critical temperature, and attaching each of the paired staple by means of a stapler to a wrapping container of a cool storage product so as to force both feet of the U shaped staple to be perforated into a predetermined position of a wrapping container of a product while attaching the escaping member to the wrapping container of the cool storage product together with the indicating portion.

Therefore, the temperature sensor including a plurality of staples has the second shape at below the critical temperature, when fixed to the wrapping container of the product by means of the stapler, and is being changed into the first shape at over the critical temperature so as to force the escaping member to be escaped from the product, when exposed for a long time, even temporarily, thereby enabling the indicating portion to indicate the damage of the product.

According to still another embodiment of the invention, a temperature sensor comprises a strip unit constituted in an aggregate as a plurality of M-shaped staples, each of which has two feet and is made of a shape memory alloy having a first shape at over a critical temperature and, in which the staple is inserted into a predetermined position of a wrapping container of a cool storage product while being changed into a U-shaped form by means of a stapler and then is bent downward by means of a separate press to be made into a second shape, thereby being returned to the fist shape at over the critical temperature and escaped from the wrapping container of the cool storage product.

A method of manufacturing a temperature sensor comprises steps of preparing a strip unit constituted in an aggregate as a plurality of M shaped staples which have two feet and are made of a shape memory alloy having a first shapes at over a critical temperature, compressing a bridge of the staple to force both feet to be widen outward in a lateral direction which is changed into a U-shaped form and bending downward by means of the separate press to attach the staple to a wrapping container of a cool storage product.

According to one embodiment, the stapler includes a projecting portion in the form of a wedge and a press provided with a base in a U-shaped form to attach the temperature sensor to a predetermined position of the cool storage product.

According to one embodiment, it is preferable that the separate press includes an end portion having a surface tapered downward and a base supporting the lower surface of the bridge to bend a part of the bridge, downward.

Also, it is preferable that the temperature sensor further comprises a fixing pin inserted into the inner space of the bridge to secure its attachment to the cool storage product without the bridge being not bent.

According to still another embodiment of the invention, a temperature sensor comprises a strip unit which is constituted in an aggregate as a plurality of U-shaped staples, in which each staple is separated from the strip unit in advance and then attached to an indicating portion formed on a side surface of a cool storage product. The staple is made into a second U-shape at below the critical temperature and is changed into a first shape of a bar type at over the critical temperature when exposed for a long time, even temporarily, thereby enabling the indicating portion to indicate the damage of the product.

A method of manufacturing a temperature sensor comprises steps of preparing a strip unit constituted in an aggregate as a plurality of U-shaped staples which have two feet and are made of a shape memory alloy, separating one staple from the strip unit and attaching it to an indicating portion formed on a side surface of a cool storage product. Therefore, the staple is made into a second shape of a U-character at below the critical temperature and is changed into a first shape of a bar type at over the critical temperature when exposed for a long time, even temporarily, thereby enabling the indicating portion to indicate the damage of the product.

The various aspects of the invention provide a temperature sensor using a shape memory alloy, which comprises a strip unit of a plurality of staples or paired staples coupled with each another in a unit body and easily attached to a product to be stored at a lower temperature by means of a stapler, and a manufacturing method thereof. The invention also provides a temperature sensor using a shape memory alloy, which comprises a strip unit of a plurality of staples paired in a different structure to enable one staple having an indicating portion to indicate the normal state of a product and is easily attached to a product to be stored at a lower temperature by means of a stapler. The invention also provides a temperature sensor using a shape memory alloy, which comprises a strip unit of a plurality of staples and is easily attached to a product to be stored at a lower temperature by means of a stapler while being processed by means of another stapler to be made into a second shape below a critical temperature, and on the contrary to be changed into a first shape and then escaped from the product when exposed to over a critical temperature thereby to indicate the damage of the product, and a manufacturing method thereof. The invention also provides a temperature sensor using a shape memory alloy, which comprises a strip unit of a plurality of staples and from which each staple is separated and attached to a indicating portion formed on a flat surface such as a side surface of a cool storage product to be made into a second shape below a critical temperature, and to be changed into a first shape when exposed to over a critical temperature thereby to indicate the damage of the product, and a manufacturing method thereof.

The invention now will be described in detail with respect to the accompanying drawings, in which:
Figs. 1, 2 and 3 are perspective views respectively illustrating strip units constituted in an aggregate as a plurality of staples made into various shapes using a shape memory alloy according to one embodiment of the invention;
Figs. 4A to 4F are flow charts of manufacturing a temperature sensor by applying a strip unit to a stapler;
Fig. 5 is a perspective view illustrating a single staple constructed to have a first shape that is made into a temperature sensor according to another embodiment of the invention;
Figs. 6A to 6D are exploded perspective views illustrating steps of attaching a staple to a cool storage product so as to have a second shape using first and second staplers;
Fig. 7 is a view illustrating states that the staple is attached to the cool storage product and then escaped therefrom when exposed to over a critical temperature;
Figs. 8 and 9 are views illustrating states that the staple is attached to the cool storage product using a fixing pin and then escaped therefrom when exposed to over a critical temperature;
Figs. 10 and 11 are perspective views respectively illustrating strip units constituted in an aggregate as a plurality of staples made into various shapes using a shape memory alloy according to still another embodiment of the invention;
Figs. 12A and 12B are flow charts illustrating steps of manufacturing a temperature sensor by applying a strip unit to a stapler;
Figs. 13 and 14 are perspective views respectively illustrating strip units constituted in an aggregate as a plurality of paired staples, in which the paired staple includes a staple using a shape memory alloy, an escape member fixed to and/or escaped from the staple and an indicating portion for indicating the state of a cool storage product according to still another embodiment of the invention;
Figs. 15A and 15B are flow charts illustrating steps of manufacturing a temperature sensor by applying a strip unit to a stapler; and
Figs. 16A and 16B are views illustrating the operating states of a temperature sensor including a staple which is separated from a strip unit and attached on an indicating portion of a cool storage product according to still another embodiment of the invention.

### DETAILED DESCRIPTION OF THE INVENTION

The invention now will be described based on several embodiments that are considered to pertain to a scope of one invention.

### EMBODIMENT 1

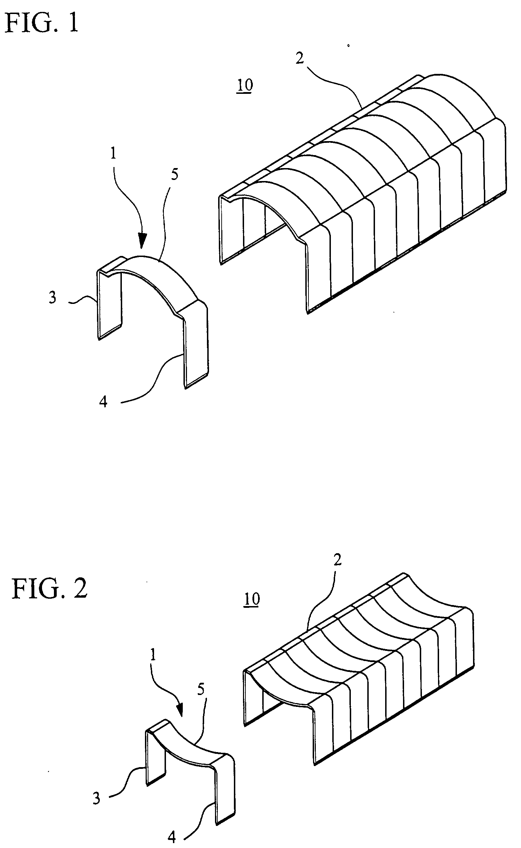

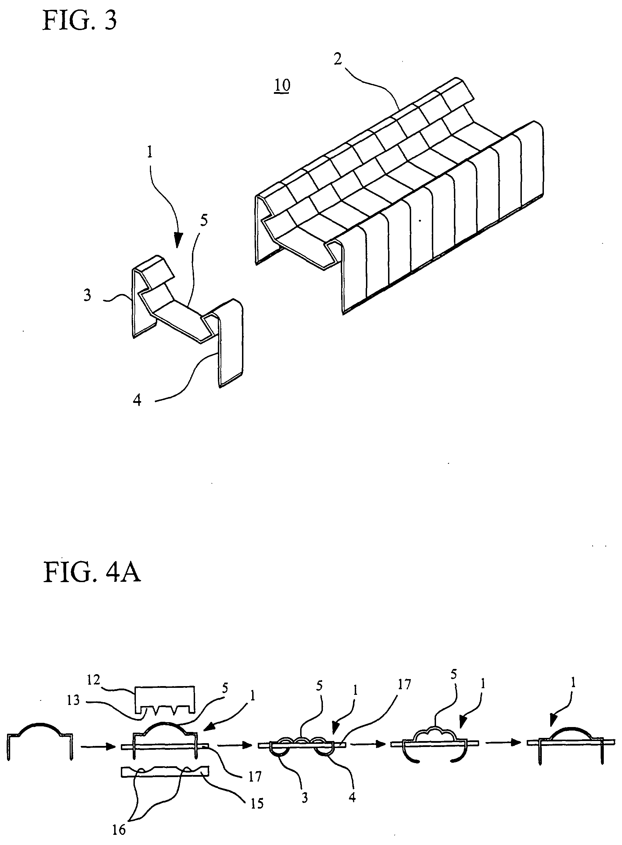

As shown in Figs. 1, 2 and 3, the invention comprises a temperature sensor 10. The temperature sensor 10 comprises a strip unit 2 which is constituted in an aggregate as a plurality of U shaped staples 1 having two feet 3 and 4 and a bridge 5 expanded there between. The staple 1 is made of a shape memory to have a first shape at over its critical temperature and an auxiliary second shape at below the critical temperature. The staple 1 may have various first shapes at over the critical temperature, because the shape of the bridge 5 is variously modified. For example, as shown in Fig. 1, the staple 1 is provided with the bridge 5 having flat surfaces formed on a predetermined area adjacent to both feet 3 and 4 and a projecting arc portion projected upward from its center portion. As shown in Fig. 2, the staple 1 is provided with the bridge 5 having flat surfaces formed on a predetermined area adjacent to both feet 3 and 4 and a projecting arc portion projected downward from its center portion. As shown in Fig. 3, the staple 1 is provided with the bridge 5 having flat surfaces formed on a predetermined area adjacent to both feet 3 and 4 and a projecting arc portion projected downward with being corrugated in a multi-sided form from its center portion. Therefore, the staple 1 can be manufactured as one object of a strip unit 1 coupled in an aggregate to each another with being arranged in a side by side. On the other hand, the stapler can be used so that the staple 1 shall be kept in a predetermined second shape below a critical temperature, its detailed explanation of which is omitted due to a structure well known. But, the stapler can make a second shapes corresponding to various first shapes of the staple 1. That is why a press of the stapler is provided with a compressing portion 12 having a predetermined shape.

For example, as shown in Fig. 4A, when the staple 1 having the upward projecting arc bridge 5 is applied to the stapler, the compressing portion 12 includes three arc groove 13 formed to be corresponded to the width of the bridge 5, in which the center groove has a gradient surface formed around its circumference and the side grooves also have a gradient surface formed around their inner semi-circumferences adjacent to the gradient surface of the center groove. A base 15 is positioned to face against the compressing portion 12. The base 15 includes two circular grooves 16 formed on the positions corresponding to both feet 3 and 4.

Therefore, as the strip unit 2 is loaded into the stapler, the stapler is positioned on a predetermined position of a cool storage product or a milk container 17 and then the compressing portion 12 is pressed to attach one staple 1 to the milk container 17. At this time, the staple 1 is attached to the milk container 17 in a manner that the bridge 5 is compressed into the three arc grooves 13 facing to the upper surface of the milk container 17 by the compressing portion 12 to form three projecting arcs, while both feet 3 and 4 are passed through the wall of the milk container 17 and then bent inwardly at their ends to be positioned on the lower surface of the milk container 17. At this time, the staple 1 has a predetermined second shape. Therefore, the temperature sensor having the first and second shapes is established. Thereafter, the staple 1 attached to the cool storage product is changed into the first shape to indicate the damage of the product, thereby drawing a user's attention, if it is exposed to over a critical temperature for a long time, even temporarily.

As shown in Fig. 4B, when the staple 1 having the upward projecting arc bridge 5 is applied to the stapler, the compressing portion 12 includes two arc groove 21 formed on both sides thereof to be corresponded to the width of the bridge 5 and a projecting arc portion projected the center portion therefrom. A base 15 is positioned to face against the compressing portion 12. The base 15 includes two circular grooves 16 formed on the positions corresponding to both feet 3 and 4.

Therefore, as the strip unit 2 is loaded into the stapler, the stapler is positioned on a predetermined position of a cool storage product or a milk container 17 and then the compressing portion 12 is pressed to attach one staple 1 to the milk container 17. At that time, the staple 1 is attached to the milk container 17 in a manner that the bridge 5 is compressed into the two arc grooves 21 facing to the upper surface of the milk container 17 by the compressing portion 12 to form two projecting arcs, while both feet 3 and 4 are passed through the wall of the milk container 17 and then bent inwardly at their ends to be positioned on the lower surface of the milk container 17. At this time, the staple 1 has a predetermined second shape. Therefore, the temperature sensor having the first and second shapes is established. Thereafter, the staple 1 attached to the cool storage product is changed into the first shape to indicate the damage of the product, thereby drawing a user's attention, if it is exposed to over a critical temperature for a long time, even temporarily.

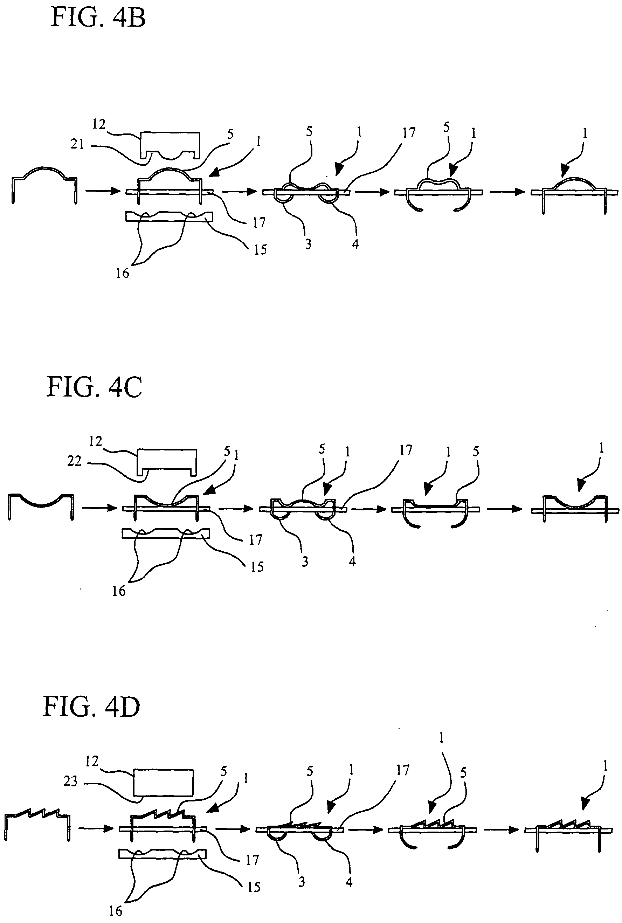

As shown in Fig. 4C, when the staple 1 having the downward projecting arc bridge 5 is applied to the stapler, the compressing portion 12 includes one groove 22 formed to be corresponded to the width of the bridge 5 and its both side portions are projected. A base 15 is positioned to face against the compressing portion 12. The base 15 includes two circular grooves 16 formed on the positions corresponding to one side of both feet 3 and 4.

Therefore, as the strip unit 2 is loaded into the stapler, the stapler is positioned on a predetermined position of a cool storage product or a milk container 17 and then the compressing 12 is pressed to attach one staple 1 to the milk container 17. At that time, the staple 1 is attached to the milk container 17 in a manner that the bridge 5 is compressed into the three arc grooves 22 facing the upper surface of the milk container 17 by the compressing portion 12 to form three projecting arcs, while both feet 3 and 4 are passed through the wall of the milk container 17 and then bent inwardly at their ends to be positioned on the lower surface of the milk container 17. At this time, the staple 1 has a predetermined second shape. Therefore, the temperature sensor having the first and second shapes is established. Thereafter, the staple 1 attached to the cool storage product is changed into the first shape to indicate the damage of the product, thereby drawing a user's attention, if it is exposed to over a critical temperature for a long time, even temporarily.

As shown in Fig. 4D, the staple 1 includes a bridge 5 as not shown in Figs. 1, 2 and 3, on the center portion of which a plurality of tooth portions are formed. When the staple 1 is applied to the stapler, the compressing portion 12 includes a flat bottom 24 corresponding to the width of the bridge 5. A base 15 is positioned to face against the compressing portion 12. The base 15 includes circular grooves 16 formed on the positions corresponding to one side of both feet 3 and 4.

Therefore, as the strip unit 2 is loaded into the stapler, the stapler is positioned on a predetermined position of a cool storage product or a milk container 17 and then the compressing portion 12 is pressed to attach one staple 1 to the milk container 17. At that time, the staple 1 is attached to the milk container 17 in a manner that the bridge 5 is compressed against a flat plane 13 facing to the upper surface of the milk container 17 by the compressing portion 12, while both feet 3 and 4 are passed through the wall of the milk container 17 and then bent inwardly at their ends to be positioned on the lower surface of the milk container 17. At this time, the staple 1 has a predetermined second shape. Therefore, the temperature sensor having the first and second shapes is established. Thereafter, the staple 1 attached to the cool storage product is changed into the first shape to indicate the damage of the product, thereby drawing a user's attention, if it is exposed to over a critical temperature for a long time, even temporarily.

As shown in Fig. 4E, the staple 1 includes a bridge 5 as not shown in Figs. 1, 2 and 3, the top portion of which is projected upward in more than two steps. When the staple 1 having the upward projected bridge 5 is applied to the stapler, the compressing portion 12 includes two rectangular grooves 25 formed on both sides thereof to be corresponded to the width of the bridge 5 and a projecting portion formed on the center portion thereof. A base 15 is positioned to face against the compressing portion 12. The base 15 includes two circular grooves 16 formed on the positions corresponding to both feet 3 and 4.

Therefore, as the strip unit 2 is loaded into the stapler, the stapler is positioned on a predetermined position of a cool storage product or a milk container 17 and then the compressing 12 is pressed to attach one staple 1 to the milk container 17. At this time, the staple 1 is attached to the milk container 17 in a manner that the bridge 5 is compressed into the two rectangular grooves 24 facing to the upper surface of the milk container 17 by the compressing portion 12 to form three projecting arcs, while both feet 3 and 4 are passed through the wall of the milk container 17 and then bent inwardly at their ends to be positioned on the lower surface of the milk container 17. At this time, the staple 1 has a predetermined second shape. Therefore, the temperature sensor having the first and second shapes is established. Thereafter, the staple 1 attached to the cool storage product is changed into the first shape to indicate the damage of the product, thereby drawing a user's attention, if it is exposed to over a critical temperature for a long time, even temporarily.

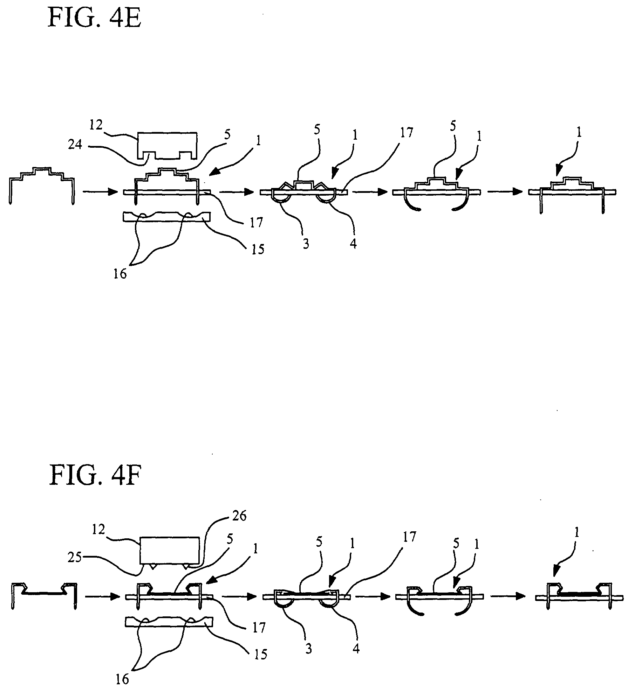

As shown in Fig. 4F, the staple 1 includes a bridge 5 as shown in Fig. 3, both sides of which are bent downward. When the staple 1 having the downward bent bridge 5 is applied to the stapler, the compressing portion 12 includes two projectors 26 formed on both sides thereof. A base 15 is positioned to face against the compressing portion 12. The base 15 includes two circular grooves 16 formed on the positions corresponding to one side of both feet 3 and 4.

Therefore, as the strip unit 2 is loaded into the stapler, the stapler is positioned on a predetermined position of a cool storage product or a milk container 17 and then the compressing portion 12 is pressed to attach one staple 1 to the milk container 17. At that time, the staple 1 is attached to the milk container 17 in a manner that the bridge 5 is compressed into the two arc grooves 16 facing to the upper surface of the milk container 17 by the compressing portion 12 to flat its bent portions, while both feet 3 and 4 are passed through the wall of the milk container 17 and then bent inwardly at their ends to be positioned on the lower surface of the milk container 17. At this time, the staple 1 has a predetermined second shape. Therefore, the temperature sensor having the first and second shapes is established. Thereafter, the staple 1 attached to the cool storage product is changed into the first shape to indicate the damage of the product, thereby drawing a user's attention, if it is exposed to over a critical temperature for a long time, even temporarily.

### EMBODIMENT 2

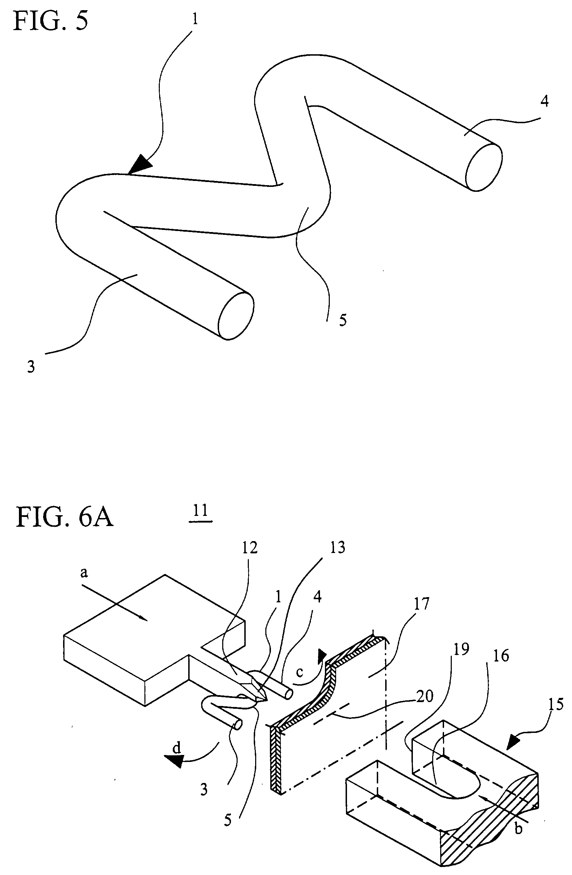

Referring to Fig. 5, a temperature sensor comprises a strip unit constituted in an aggregate as a plurality of staples as not shown in the drawings. The staple 1 includes two feet 3 and 4 laterally widen a little and a bridge 5 in the form of the V character there between, its shape of which is constituted as a M shaped staple made of a shape memory alloy having a first shape at over a critical temperature. And, the first shape may be returned from an auxiliary one due to the inherent property formed by the heat treatment of a shape memory alloy, even through the staple 1 is changed by an outside physical force such as the bending, twisting, curving, etc.

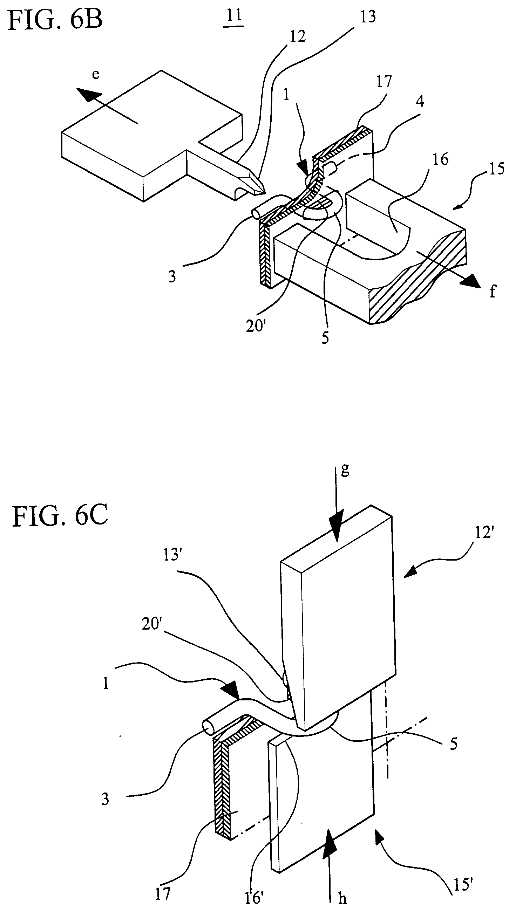

Following it, the staple 1 has to be kept in a predetermined shape at below a critical temperature. For it, as shown in Fig. 6, a second shape can be established irrelevant to various first shapes. According to this embodiment, two different staplers are used so that the staple 1 has a predetermined second shape.

For example, as shown in Figs. 6A and 6B, an M shaped staple 1 including a bridge of the V character form is processed into a first shape. A first stapler comprises a first press 11 including a first compressing portion 12 projected from its center portion and a wedge 13 formed on the end of the compressing portion 12. Herein, the wedge 13 supports the V groove of the bridge 5 and perforates the wall of a milk container 17 to forces the bridge 5 to be inserted thereinto, when the first stapler is operated. And, a first base 15 cooperating with the first compressing portion 12 includes a U shaped groove 16 formed at the center and flat supporting surfaces 19 formed at the top on both sides of the groove 16. Therefore, the use of the stapler forces the bridge 5 to be passed through and inserted into a hole 20' on a predetermined position 20 to be formed upon the perforating of the wall of the milk container 17. Thereafter, the first compressing portion 12 and the base 15 are moved in each of direction a and b facing to each other. The foots 3 and 4 of the staple 1 laterally widen a little are supported against the supporting surfaces 19. At that time, the flat surfaces of the compressing portion 12 on both sides of the compressing portion 12 forces the foots 3 and 4 to be widen outward in directions c and by exerting the compressing force facing to the supporting surface of the fist base 15 and the V shaped bridge 5 to be made into a U shaped form.

Next, as shown in Fig. 6B, after inserting the staple 1 into the wall of the milk container 17, the first compressing portion 12 and the first base 15 are moved backs in each of direction e and f to their original positions.

As shown in Fig. 6C, the staple 1 is secondly processed by a second stapler. The second stapler includes a second compressing portion 12' and a second base 15' facing against the second compressing portion 12'. The second compressing portion 12' includes an end blade 13', one side of which is slanted. A second base 15' is alternately arranged facing to the second press 12', a top surface of which is constituted as a supporting portion 16'. Under the state that the staple 1 is being inserted into the wall of the milk container 17 by means of the first stapler, the second compressing portion 12' and the second base 15' are respectively positioned on the upper and lower surfaces of the bridge 5 and then moved in arrow directions g and h to force the end portion of the bridge 5 to be bent downward in part. At that time, the staple 1 is attached to the hole 20' formed on the wall of the milk container 17 as shown in Fig. 6D, in a manner that the foots 3 and 4 are widen in opposite to each other, and the bridge 5 is bent at the end to fix the staple 1 to the milk container 17. Therefore, the temperature sensor having the first and second shapes is established.

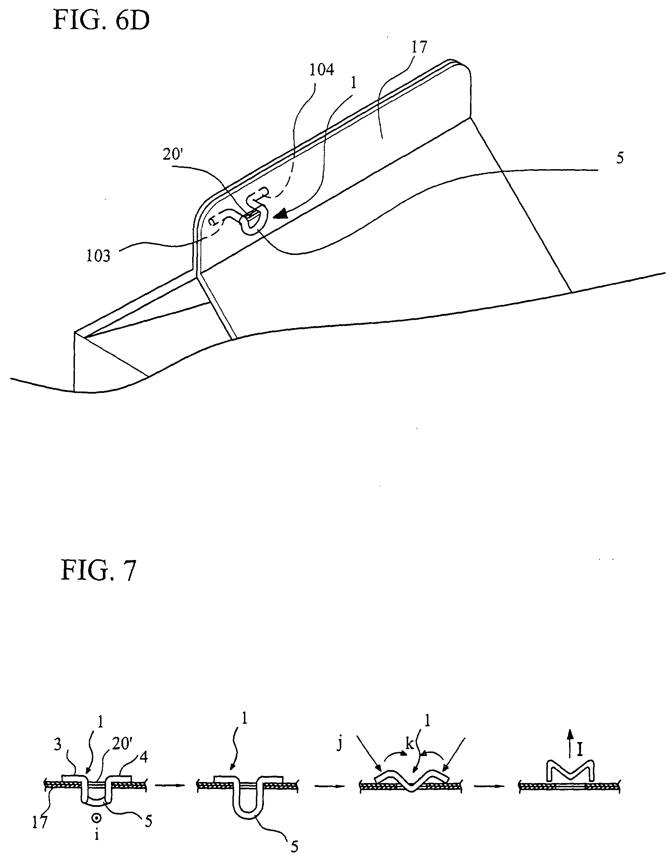

Thereafter, the staple 1 attached to the cool storage product is changed into the first shape to indicate the damage of the product, thereby drawing a user's attention, if it is exposed to over a critical temperature for a long time, even temporarily. As shown in Fig. 7, if the staple 1 is exposed to over a critical temperature or the milk container 17 is wrongly stored, the bridge 5 is unfolded upward to be positioned corresponding to the hole 20', while the foots 3 and 4 and the bridge 5 is contracted in arrow directions j and k repulsive against both wall surfaces of the milk container 17. Accordingly, the staple 1 is returned to its original shape that is the first shape of the M, while being escaped from the milk container 17 like an arrow direction I. A user can identify the damage of the milk filled in the container 17 based on whether the staple 1 is attached to the milk container 17 or not.

Further, another example can be suggested to facilitate the damage of a product to be identified, which is associated with this embodiment.

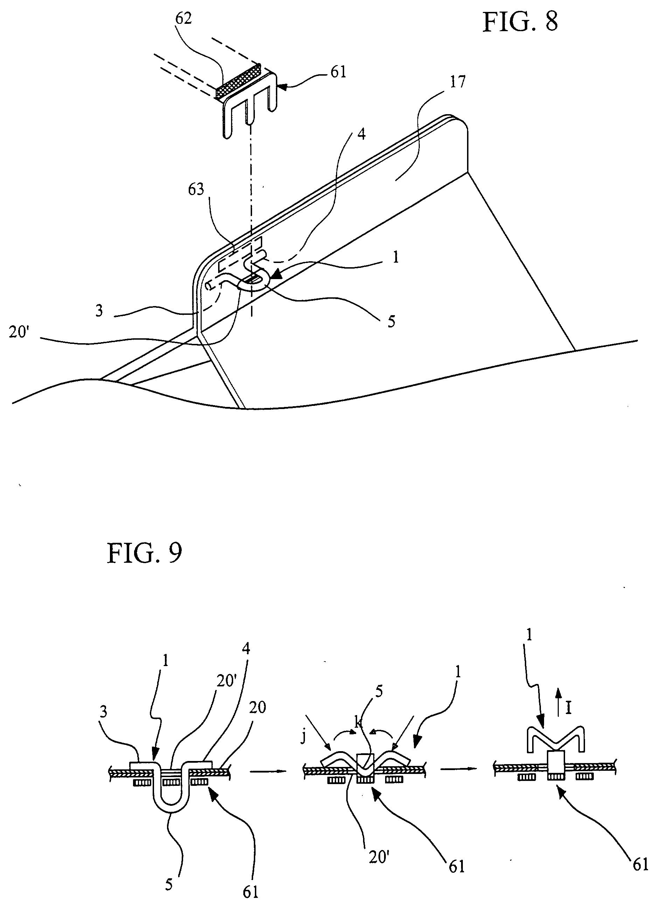

As shown in Fig. 8, the staple 1 is attached to the wall of the milk container 17 using only the first stapler and a fixing pin 61 for preventing the escaping of the staple 1 from the hole 20' instead of the bridge 5 being bent downward. The fixing pin 61includes three foots extended downward in the form of a fork. Therefore, as the staple 1 is inserted into the hole 20' of the milk container 17 which is perforated by the first stapler, the fixing pin 61 is supported on a predetermined position directly over the hole 20' adjacent to the bridge 5 by an adhesive member 63 adhesives applied on both side surfaces after its middle foot is inserted into the space of the U shaped bridge 5, in which the adhesive member 63 is applied in advance on any one of the fixing pin 61 and the milk container 17. Therefore, as the staple 1 has the second shape of a U character, the temperature sensor having the first and second shapes is established.

In other words, the staple 1 attached to the cool storage product is changed into the first shape to indicate the damage of the product, thereby drawing a user's attention, if it is exposed to over a critical temperature for a long time, even temporarily. As shown in Fig. 9, if the staple 1 is exposed to over a critical temperature or the milk container 17 is wrongly stored, the foots 3 and 4 and the bridge 5 are contracted in directions j and k repulsive against both wall surfaces of the milk container 17. Accordingly, the staple 1 is returned to its original shape that is the first shape of the M, while being escaped from the milk container 17 like an arrow direction i. A user can identify the damage of the milk filled in the container 17 based on whether the staple 1 is attached to the milk container 17 or not.

### EMBODIMENT 3

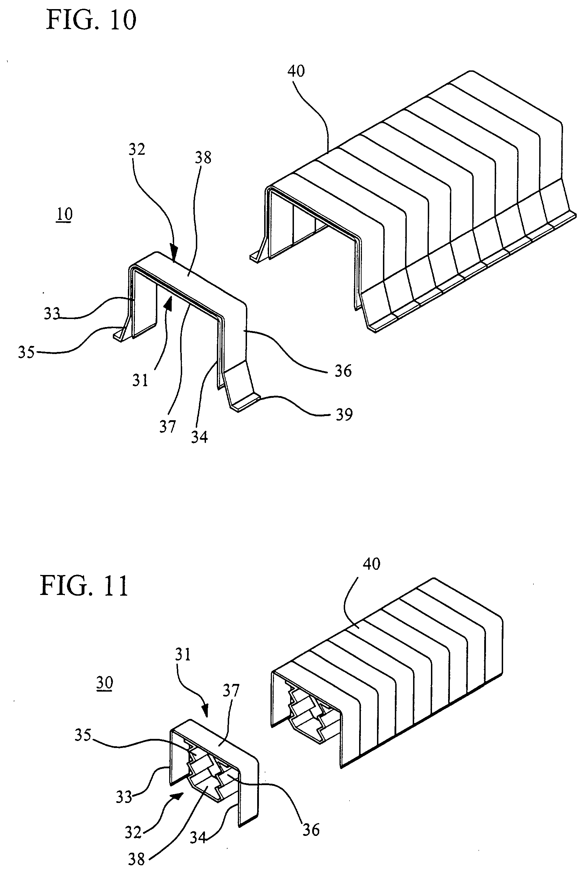

According to still another embodiment of the invention, as shown in Figs. 10 and 11, the invention comprises a temperature sensor 10. The temperature sensor 10 comprises a strip unit 40 which is constituted in an aggregate as a plurality of staple members 30, in which the staple member 30 includes first U shaped staple 3 land and a second U shaped staple 32 of a dual structure superposed to each other, each of which has two feet. The strip unit 40 is made of a shape memory alloy to have a first shape at over its critical temperature and an auxiliary second shape at below the critical temperature.

As shown in Fig. 10, the staple member 30 includes a pair of a first staple 31 and a second staple 32, in which the first staple 31 has both first foots 33 and 34 and a first flat bridge 37, and the second staple 32 has both second foots 35 and 36 and a second flat bridge 38. The second flat bridge 38 is positioned on the first flat bridge 37 by adhesives applied therebetween or a spot, etc. Herein, it is noted that the second foots 35 and 36 of the second staple 32 are some longer than those of the first staple 31 and slanted from a portion extended down from the first foots 33 and 34, the ends of which are formed to have a contacting portion 29. Therefore, the staple member 30 can be manufactured as one object of a strip unit 40 coupled in an aggregate to each another with being arranged in a side by side.

Also, as shown in Fig. 11, the staple member 30 includes a pair of a first staple 31 and a second staple 32, in which the first staple 31 has both first foots 33 and 34 and a first flat bridge 37, and the second staple 32 has both second foots 35 and 36 corrugated to have the elasticity up and downwards and a second flat bridge 38. The second flat bridge 38 is positioned on the lower surface of the first flat bridge 37 by the welding, etc. Herein, it is noted that the second foots 35 and 36 of the second staple 32 are somewhat longer than those of the first staple 31. Therefore, the staple member 30 can be manufactured as one object of a strip unit 40 coupled in an aggregate to each other with being arranged in a side by side.

On the other hand, the stapler can be used so that the staple member 30 shall be kept in a predetermined second shape below a critical temperature, its detailed explanation of which is omitted due to a structure well known. But, the stapler can make second shapes corresponding to various first shapes of the staple member 30. That is why a press of the stapler is provided with a compressing portion 42 having a predetermined shape.

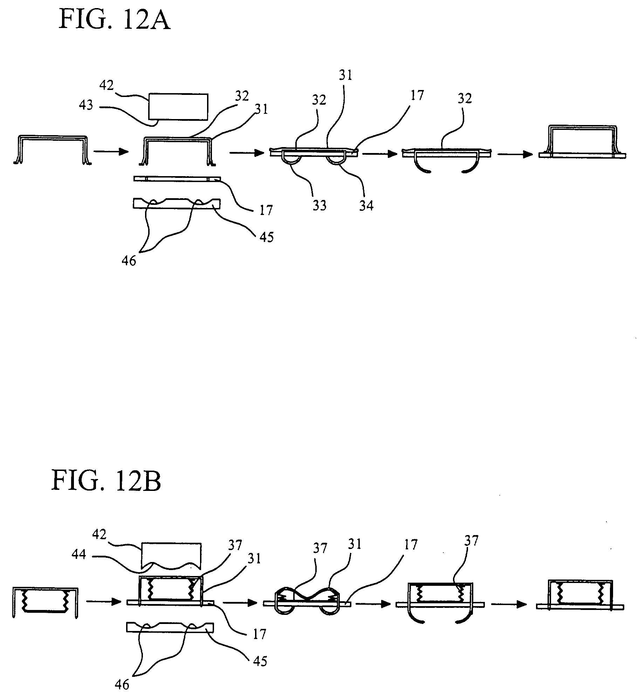

As shown in Fig. 12A, the staple member 30 including the bridges 31 and 32 dually superposed to each other is applied to the stapler as follows: a compressing portion 42 has a flat surface 43 on the lower end thereof. A base 45 is positioned to face against the compressing portion 42. The base 45 includes two circular grooves 46 formed on the positions corresponding to both feet 33 and 34 of the first staple 31, respectively.

Therefore, as the strip unit 40 is loaded into the stapler, the stapler is positioned on a predetermined position of a cool storage product or a milk container 17, and then the compressing portion 42 is pressed to attach the first staple 31 to the milk container 17. At this time, the staple member 30 is attached to the milk container 17 in a manner that the flat bridges 37 and 38 are compressed to unfold the second foots 35 and 36 of the second staple 32 on the upper surface of the milk container 17, while the first foots 33 and 34 of the first staple 31 are passed through the wall of the milk container 17 and then bent inwardly at their ends to be positioned on the lower surface of the milk container 17. Therefore, the staple member 30 has a predetermined second shape. Therefore, the temperature sensor having the first and second shapes is established. Thereafter, the staple member 30 attached to the cool storage product is changed into the first shape to be escaped from the milk container 17, thereby drawing a user's attention, if it is exposed to over a critical temperature for a long time, even temporarily.

As shown in Fig. 12B, the staple member 30 including the first and second staples 3 land 32 arranged against each other and one of these is arranged as a bridge 37. The staple is applied by the stapler as follows: a compressing portion 42 includes two circular grooves 44 formed on the lower surface thereof to have a projecting arc portion on the center thereof. A base 45 is positioned to face against the compressing portion 42. The base 45 includes two circular grooves 46 formed on the positions corresponding to both feet 33 and 34 of the first staple 31, respectively.

Therefore, as the strip unit 40 is loaded into the stapler, the stapler is positioned on a predetermined position of a cool storage product or a milk container 17, and then the compressing portion 42 is pressed to attach the first staple 31 to the milk container 17. At this time, the staple member 30 is attached to the milk container 17 in a manner that the flat bridge 37 is compressed into the two circular grooves 44 to form two projecting arc portions and a groove on the upper surface of the milk container 17 and then to position the second corrugated foots 35 and 36 of the second staple 32 into the two circular arc portions, while the first foots 33 and 34 of the first staple 31 are passed through the wall of the milk container 17 and then bent inwardly at their ends to be positioned on the lower surface of the milk container 17. Therefore, the staple member 30 has a predetermined second shape. Therefore, the temperature sensor having the first and second shapes is established. Thereafter, the strip unit 30 attached to the cool storage product is changed into the first shape to be escaped of the milk container 17, thereby drawing a user's attention, if it is exposed to over a critical temperature for a long time, even temporarily.

### EMBODIMENT 4

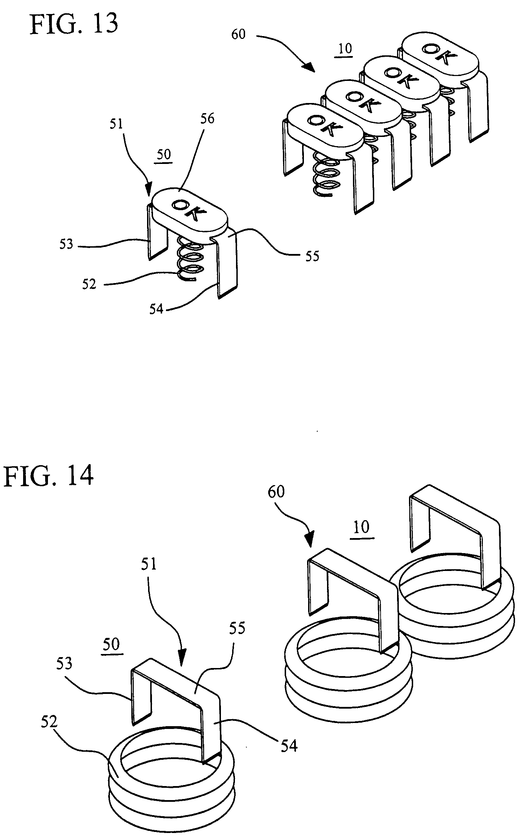

According to still another embodiment of the invention, as shown in Figs. 13 and 14, the invention comprises a temperature sensor 10. The temperature sensor 10 comprises a strip unit 60 constituted in an aggregate as a plurality of staple members 50, in which the staple member 50 includes a staple 51 having two feet and an escaping function portion 52 fixed to the lower surface of the first staple 51. The strip unit 60 is made of a shape memory alloy to have a first shape at over its critical temperature and an auxiliary second shape at below the critical temperature.

As shown in Fig. 13, the staple member 50 includes a pair of the staple 50 and the escaping function portion 52, in which the staple 51 includes both of first foots 53 and 54 and a first flat bridge 55 extended therebetween and the escaping function portion 52. The escaping function portion 56 is molded on the flat bridge 55 using a synthetic resin or a plastic material to have a word such as OK, etc. for indicating the normal state of a cold storage product or a milk container 17. The escaping function portion 52 is fixed by means of adhesives, etc. to the lower surface of the indicating portion 56 or the bridge 55 in the form of a spring having a predetermined elastic force, the length of which is equal to or some longer than those of the foots 53 and 54. Therefore, the staple member 50 can be manufactured as one object of a strip unit 60 coupled in an aggregate to each another with being arranged in a side by side.

Also, as shown in Fig. 14, the staple member 50 includes a pair of a staple 51 and an escaping function portion 52, in which the staple 51 includes both first foots 53 and 54 and a first flat bridge 55 extended therebetween and the escaping function portion 52 is made into a bellows type using a rubber, etc. to have a predetermined elastic force. Therefore, the staple 51 is manufactured as one object of a strip unit 40 coupled in an aggregate to each other with being arranged in a side by side. The escaping function portion 52 is separately manufactured and coupled along with the staple 51 to a milk container 17 as described below.

On the other hand, the stapler can be used so that the staple member 50 shall be kept in a predetermined second shape below a critical temperature, its detailed explanation of which is omitted due to a structure well known. But, the stapler can make second shapes corresponding to various first shapes of the staple member 50. That is why a press of the stapler is provided with a compressing portion 71 having a predetermined shape.

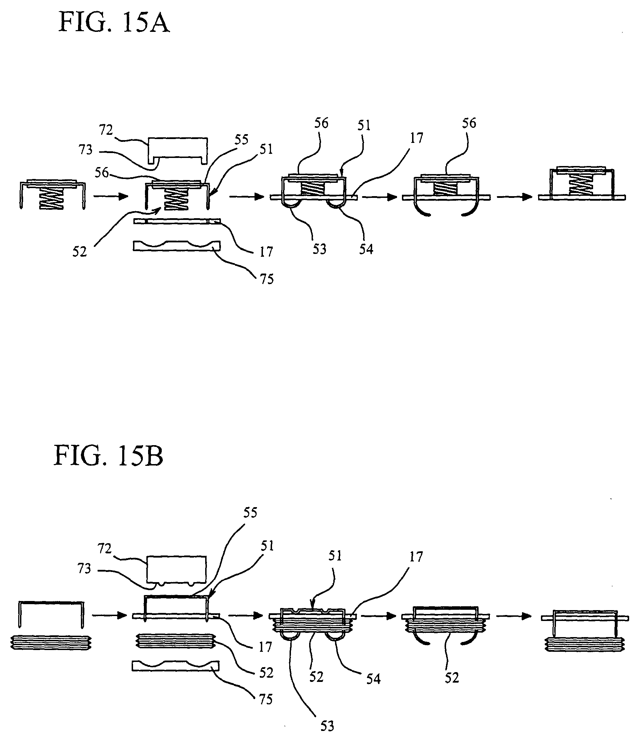

As shown in Fig. 15A, the staple member 50 including the bridge 55 with the indicating portion is applied to the stapler as follows: a compressing portion 72 has a flat surface 73 on the lower end thereof. A base 75 is positioned to face against the compressing portion 72. The base 75 includes two circular grooves 76 formed on the positions corresponding to both feet 53 and 54 of the staple 51, respectively.

Therefore, as the strip unit 60 is loaded into the stapler, the stapler is positioned on a predetermined position of a cool storage product or a milk container 17, and then the compressing portion 72 is pressed to attach the staple 51 to the milk container 17. At this time, the staple member 50 is attached to the milk container 17 in a manner that the flat bridge 55 and the indicating portion 56 are compressed against the upper surface of the milk container 17 together with the escaping function portion 52 being fixed thereto, while the foots 53 and 54 are passed through the wall of the milk container 17 and then bent inwardly at their ends to be positioned on the lower surface of the milk container 17. Therefore, the staple member 50 has a predetermined second shape. Therefore, the temperature sensor having the first and second shapes is established. Thereafter, the staple member 50 attached to the cool storage product is changed into the first shape to be escaped from the milk container 17, thereby drawing a user's attention, if it is exposed to over a critical temperature for a long time, even temporarily.

As shown in Fig. 15B, the staple member 50 including the staple 51 and the escaping function portion 52 is applied to the stapler as follows: a compressing portion 72 includes two projectors 73 formed on the lower surface thereof. A base 75 is positioned to face against the compressing portion 72. The base 75 includes two circular grooves 46 formed on the positions corresponding to both feet 53 and 54 of the staple 51, respectively.

Therefore, as the strip unit 60 is loaded into the stapler, the stapler is positioned on a predetermined position of a cool storage product or a milk container 17, and then the compressing portion 72 is pressed to attach the staple 51 to the milk container 17. At this time, the staple member 50 is attached to the milk container 17 in a manner that the flat bridge 55 is compressed against the two projectors 73 to form two grooves thereon, while the foots 53 and 54 are passed through the wall of the milk container 17 and then bent inwardly at their ends to be positioned on the lower surface of the milk container 17. Therefore, the staple member 50 has a predetermined second shape, so the temperature sensor having the first and second shapes is established. Thereafter, the strip unit 60 attached to the cool storage product is changed into the first shape to be escaped from the milk container 17, thereby drawing a user's attention, if it is exposed to over a critical temperature for a long time, even temporarily.

### EMBODIMENT 5

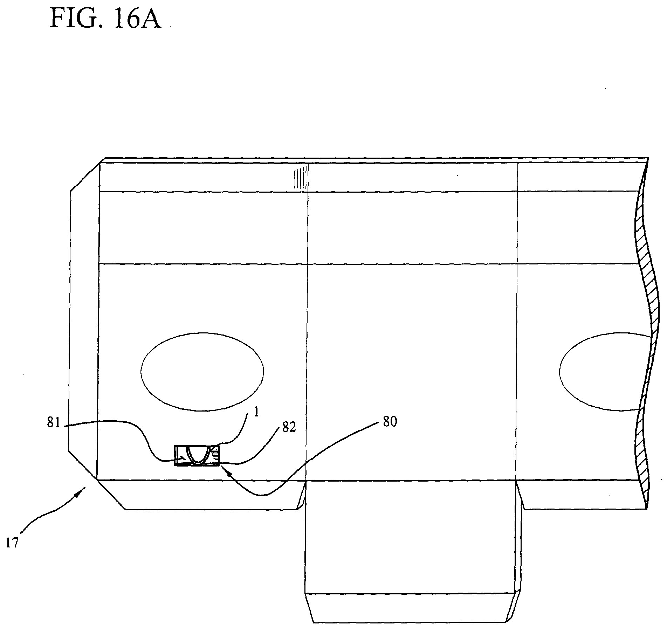

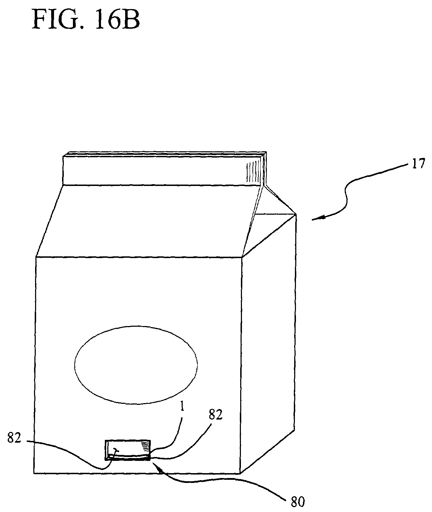

According to still another embodiment of the invention, as shown in Figs. 16A and 16B, the invention comprises a temperature sensor using a shape memory alloy, in which the temperature sensor includes a strip unit constituted in an aggregate as a plurality of staples, and each staple is separated from the strip unit to be used as the temperature sensor.

As shown in Fig. 16A, the U-shaped staple 1 is attached to an indicating portion 80 formed on a predetermined position of a side surface of a cool storage product, for example a milk container 17. The indicating portion 80 includes a groove portion 81 formed as a concaved flat surface on a predetermined position of a raw material semi-manufactured for the milk container 17 and a supporting portion 82 formed as a pocket (not shown) for supporting the staple 1. Therefore, the staple 1 is fixed in a second shape of a U-character at below a critical temperature to the side surface of the milk container 17 directly before being shipping.

Thereafter, as shown in Fig. 16B, the staple 1 is changed into a first shape of a bar type at over the critical temperature when exposed for a long time, even temporarily, thereby enabling the indicating portion to indicate the damage of the product.

Also, the invention suggests only a technology of adapting to cooling and freezing products, but a temperature sensor of the invention can be adapted to a higher temperature by changing the inherent property of a shape memory alloy.

Accordingly, the invention provides a temperature sensor of a simple configuration to be easily attached to products such as daily products, frozen meats, milk at the time of being stored at a proper temperature as well as to facilitate the identification on whether the products are exposed to over a critical temperature or wrongly handled in circulation. Its manufacturing is very easy.

## Claims

1. A temperature sensor using a shape memory alloy comprising:
a strip unit comprising a plurality of U-shaped staples, each of which has two feet and is made of a shape memory alloy having a first shape at over its critical temperature and an auxiliary second shape at below the critical temperature.

2. A method of manufacturing a temperature sensor using a shape memory alloy comprising steps of:
preparing a strip unit constituted in an aggregate as a plurality of U shaped staples, each of which has two feet and is made of a shape memory alloy having various first shapes at over its critical temperature; and
attaching the staple by means of a stapler to a wrapping container of a cool storage product so as to form an auxiliary second shape at the same as that of a compressing portion of a stapler press.

3. A temperature sensor using a shape memory alloy comprising:
a strip unit constituted in an aggregate as a plurality of M shaped staples, each of which has two feet and is made of a shape memory alloy having a first shape at over a critical temperature, in which the staple is inserted into a predetermined position of a wrapping container of a cool storage product while being changed into a U shaped form by means of a stapler and then is bent downward by means of a separate press to be made into a second shape, thereby being returned to the fist shape at over the critical temperature and escaped from the wrapping container of the cool storage product.

4. The temperature sensor using a shape memory alloy as claimed in Claim 3 in which:
the stapler includes a press, which is provided with a compressing portion projected therefrom and having a wedge at the end portion thereof, and a base in a U shaped form to attach the temperature sensor to a predetermined position of the cool storage product.

5. The temperature sensor using a shape memory alloy as claimed in Claim 3 in which:
the separate press includes an end portion having a surface tapered downward and a base supporting the lower surface of the bridge to bend a part of the bridge, downward.

6. The temperature sensor using a shape memory alloy as claimed in Claim 3 in which:
the temperature sensor further comprises a fixing pin inserted into the inner space of the bridge to secure its attachment to the cool storage product without the bridge being not bent.

7. A method of manufacturing a temperature sensor using a shape memory alloy comprising steps of:
preparing a strip unit constituted in an aggregate as a plurality of M shaped staples which have two feet and are made of a shape memory alloy having a first shapes at over a critical temperature,
compressing a bridge of the staple to force both feet to be widen outward in a lateral direction which is changed into a U shaped form; and
bending the bridge downward by means of the separate press to attach the staple to a wrapping container of a cool storage product.

8. A temperature sensor using a shape memory alloy comprising:
a strip unit constituted in an aggregate as a plurality of paired U shaped staples, each of which has two feet and made of a shape memory alloy having various first shapes, in which the paired staples are superposed in a dual structure to each other and have a first shape at over its critical temperature and an auxiliary second shape at below the critical temperature.

9. A method of manufacturing a temperature sensor using a shape memory alloy comprising steps of:
preparing a strip unit constituted in an aggregate as a plurality of paired U shaped staples which have two feet made of a shape memory alloy having various first shapes at over its critical temperature that are superposed in a dual structure to each other and are; and
attaching each of the staple to a wrapping container of a cool storage product by means of a stapler so as to force both feet of a lower staple to be perforated into a predetermined position of a wrapping container of a product and both feet of an upper staple to be widen on the position in opposite to that of both feet of the lower staple.

10. A temperature sensor using a shape memory alloy comprising:
a strip unit constituted in an aggregate as a plurality of paired staples which are made of a shape memory alloy having a first shape at over its critical temperature, in which the paired staple includes a U shaped staple having two feet and an escaping function member to be coupled with the lower bottom of the U shaped staple in opposite thereto, one of which is provided with an indicating portion for indicating the state of a cool storage product at below a critical temperature, in which the paired staple has a first shape at over the critical temperature and an auxiliary second shape at below the critical temperature.

11. The temperature sensor using a shape memory alloy as claimed in Claim 10, in which:
the escaping function portion includes a elastic spring.

12. The temperature sensor using a shape memory alloy as claimed in Claim 10, in which:
the escaping function portion includes a bellows made of rubber to have the elastic force.

13. A method of manufacturing a temperature sensor using a shape memory alloy comprising steps of:
preparing a strip unit constituted in an aggregate as a plurality of paired staples which are made of a shape memory alloy having a first shape at over its critical temperature, in which the paired staple includes a U shaped staple having two feet and an escaping member coupled to the U shaped staple made of the shape memory alloy having a shape different therefrom or changed into a different shape and escaped therefrom, one of which is provided with an indicating portion for indicating the state of a cool storage product at below a critical temperature; and
attaching each of the paired staple by means of a stapler to a wrapping container of a cool storage product so as to force both feet of the U shaped staple to be perforated into a predetermined position of a wrapping container of a product while attaching the escaping member to the wrapping container of the cool storage product together with the indicating portion.

14. A temperature sensor using a shape memory alloy comprising:
a strip unit which is constituted in an aggregate as a plurality of U shaped staples, in which each of staple is separated from the strip unit in advance and then attached to an indicating portion formed on a side surface of a cool storage product, whereby the staple is made into a second shape of a U-character at below the critical temperature and is changed into a first shape of a bar type at over the critical temperature when exposed for a long time, even temporarily, thereby enabling the indicating portion to indicate the damage of the product.

15. A method of manufacturing a temperature sensor using a shape memory alloy comprising steps of:
preparing a strip unit constituted in an aggregate as a plurality of U shaped staple which has two feet and are made of a shape memory alloy;
separating one staple from the strip unit; and
attaching the staple to an indicating portion formed on a side surface of a cool storage product.

16. A staple for attachment to an article, comprising at least a portion made of shape memory alloy, the staple being removable from the article when the portion adopts the memorised shape.

17. A staple as claimed in claim 16, wherein the staple adopts the memorised shape when heated to above a predetermined temperature.

18. A staple as claimed in claim 17, comprising first and second portions, the first portion comprising a shape memory alloy attachment member, and the second portion comprising a release member, wherein when the first portion adopts the memorised shape the attachment member is removable from the article and the release member provides a release force.

19. A staple as claimed in claim 18, wherein the release member comprises a spring or bellows.

20. A staple as claimed in claim 18, wherein the release member is formed from a shape memory alloy.

21. A staple as claimed in any one of claims 16 to 20, comprising a temperature sensor.

22. A staple as claimed in claim 21, comprising a temperature sensor for temperature sensitive food products.

23. A bank of staples as claimed in any one of claims 16 to 22, individual staples being removable from the bank for attachment to the article.

24. Food product packaging comprising a container for the food and a staple as claimed in any one of claims 16 to 22 attached to the container.
